# EUROPEAN PATENT APPLICATION

(11) **EP 3 091 416 A1**
(43) Date of publication of application: **09.11.2016**
(21) Application number: 15166532.0
(22) Date of filing: 06.05.2015
(51) Int. Cl.: G05D 23/13, F16K 15/02, F16K 17/04

(54) **THERMOSTATIC MIXING VALVE**

(71) Applicant: Esbe AB, 330 21 Reftele (SE)
(72) Inventor: Bengtsson, Dan, 33393 SKEPPSHULT (SE)
(74) Representative: Awapatent AB

(57) **Abstract**

A thermostatic mixing valve (1) having hot and cold fluid inlets (5, 7), a fluid outlet (11), a spring-biased flow control assembly (15) controlling flows to the fluid mixing chamber (9), a thermostat device (19) operating the flow control assembly (15), wherein the flow control assembly (15) is moved by the thermostat device (19). A cold fluid bypass opening (35) and a bypass closure member (37) normally closing the cold fluid bypass opening (35) and opening it to allow flow of cold fluid to the mixing chamber (9) when when a pressure force (PF) exerted to a pressure surface (49) of the bypass closure member by cold fluid in the cold fluid inlet (7) exceeds a holding force applied by a holding device (39) to the bypass closure member (37) to hold it in the closed position.

## Description

### Field of the Invention

The present invention relates to a thermostatic mixing valve comprising a valve housing with a hot fluid inlet, a cold fluid inlet, a fluid mixing chamber for receiving fluid from the hot and the cold fluid inlet, and a fluid outlet in fluid communication with the fluid mixing chamber, a spring-biased flow control assembly for controlling flow of fluid to the fluid mixing chamber, and a thermostat device for operating the flow control assembly, wherein the flow control assembly is adapted to be moved by the thermostat device in response to a preset temperature.

### Background of the Invention

Thermostatic mixing valves may be used to regulate the fluid temperature in emergency showers or eyewashers.

Such thermostatic mixing valves may be provided with a cold fluid bypass arrangement in order to secure a flow of fluid in the event of hot fluid supply failure.

US 8,500,035 discloses a thermostatic mixing valve including a cold water bypass passageway that opens upon a failure of a hot water supply.

A drawback of this thermostatic mixing valve is that it may be considered to be complex.

### Summary of the Invention

It is an object of the present invention to overcome the above described drawback, and to provide an improved thermostatic mixing valve.

This and other objects that will be apparent from the following summary and description are achieved by a thermostatic mixing valve according to the appended claims.

According to one aspect of the present disclosure there is provided a thermostatic mixing valve comprising a valve housing with a hot fluid inlet, a cold fluid inlet, a fluid mixing chamber for receiving fluid from the hot and the cold fluid inlet, and a fluid outlet in fluid communication with the fluid mixing chamber, a spring-biased flow control assembly for controlling flow of fluid to the fluid mixing chamber, and a thermostat device for operating the flow control assembly, wherein the flow control assembly is adapted to be moved by the thermostat device in response to a preset temperature, wherein the thermostatic mixing valve comprises a cold fluid bypass opening, a bypass closure member movable between a closed position in which said cold fluid bypass opening is closed by the bypass closure member and an open position in which the cold fluid bypass opening is open and allows flow of cold fluid to the mixing chamber, and a holding device arranged to apply a holding force to the bypass closure member to hold the bypass closure member in the closed position, and wherein the bypass closure member is arranged to be moved from the closed position to the open position when a pressure force exerted to a pressure surface of the bypass closure member by cold fluid in the cold fluid inlet exceeds said holding force.

During normal operation of the thermostatic mixing valve the bypass closure member is held in the closed position by the holding device. In case of a hot fluid supply failure, such as a hot water supply failure, the thermostat device moves the flow control member toward a position in which the ordinary cold fluid passageway through the valve is closed. Since the ordinary cold fluid opening is blocked the pressure force acting on the pressure surface of the closure member is then increasing and when the pressure force exerted to the pressure surface exceeds the holding force the bypass closure member is urged away from the closed position, thereby allowing flow of cold fluid from the cold fluid inlet to the mixing chamber. Hence, cold fluid is allowed to enter the mixing chamber although the thermostat device holds the fluid control member in a position in which it blocks the normal cold fluid path through the valve. This has the advantage that a sufficient flow of fluid may be delivered even upon a hot fluid failure.

Hence, this thermostatic mixing valve includes a cold fluid bypass passageway controlled by a pressure-operated closure member that opens upon a failure of a hot fluid supply to the valve. The thermostatic mixing valve may be used with safety devices, such as eyewash and drench shower stations, and allows the continued delivery of cold fluid upon hot fluid supply failure. The thermostatic mixing valve may thus allow continued delivery of cold water upon hot water supply failure.

Hence, in a normal operating mode the closure member is held in the closed position by the holding device and in a bypass operating mode the bypass closure member is held in the open position by a pressure force exerted thereon by cold fluid in the cold fluid inlet.

According to one embodiment said bypass opening is a central opening in a portion, such as a bottom cup, of said valve housing. The bypass opening may thus be arranged in a base surface of a bottom cup of the valve housing.

According to one embodiment the central opening is circular or elliptical.

According to one embodiment the central opening is circular with a diameter of 6-20 mm, more preferably 8-18 mm and most preferably 11-15 mm.

According to one embodiment the area of the central opening is 30-314 mm², more preferably 50-250 mm² and most preferably 95-180 mm².

According to one embodiment the central opening is surrounded by a seat against which the bypass closure member is biased by the holding device.

According to one embodiment the holding device comprises a spring and preferably a conical spring.

According to one embodiment the spring is a coil spring.

The bypass closure member may thus be spring-biased, which provides for a robust and reliable bypass arrangement.

According to one embodiment said bypass closure member is disc-shaped.

According to one embodiment the hot fluid inlet and the cold fluid inlet are disposed perpendicular to each other in order to provide a certain flow pattern.

According to one embodiment the hot fluid inlet and the cold fluid outlet are disposed opposite to each other in order to provide a certain flow pattern.

According to one embodiment the hot fluid inlet and the fluid outlet are disposed opposite to each other and the cold fluid inlet is disposed perpendicular to each of the hot fluid inlet and the fluid outlet. Hence, in this embodiment the valve ports of the thermostatic mixing valve are arranged in a T-configuration.

According to another aspect of the present disclosure there is provided a safety shower system, such as an eyewash or emergency shower system, which safety shower system comprises a thermostatic mixing valve according to the present disclosure.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 is a cross section showing a thermostatic mixing valve according to an embodiment of the present disclosure in a normal operating mode.
Fig. 2 is a cross section showing the thermostatic mixing valve shown in Fig. 1 upon a hot water supply failure.

### Description of preferred embodiments

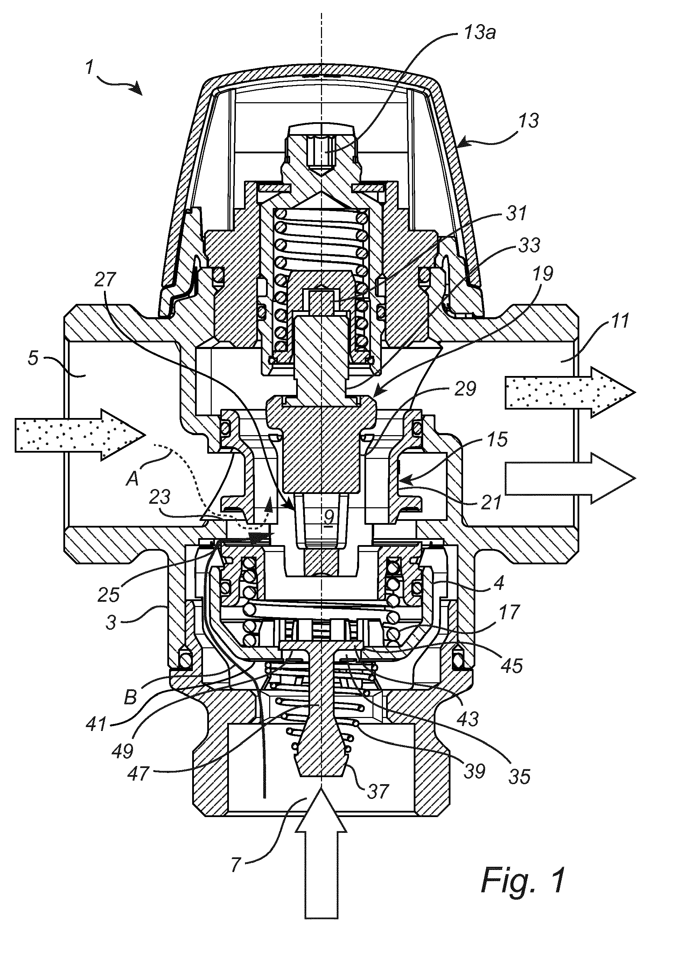

Fig. 1 illustrates a thermostatic mixing valve 1 according to an embodiment of the present disclosure. The thermostatic mixing valve 1 comprises a housing 3 with a hot water inlet 5, a cold water inlet 7, a mixing chamber 9 for receiving water from the hot and the cold water inlet, as illustrated by the arrows A and B, respectively, in Fig. 1. The mixed water exits the mixing chamber 9 through a fluid outlet 11.

The desired fluid temperature is preset by means of a schematically shown actuator 13. The actuator 13 presets the temperature in a known manner by screwing in or out an adjustment screw 13a inserted in the upper part of the valve housing 3.

The thermostatic mixing valve 1 further comprises a flow control assembly 15, a compression spring 17 and a thermostat device 19. The compression spring 17 is arranged to bias the flow control assembly 15. The flow control assembly 13 is thus spring-biased by the compression spring 17. The compression spring 17 is arranged between the flow control assembly 15 and a portion, in the form of a bottom cup 4, of the valve housing 3.

The flow control assembly 15 comprises a valve piston 21 which is continuously movable between a first seat 23 with closed hot water inlet 5 and opened cold water inlet 7 and a second seat 25 with closed cold water inlet 7 and opened hot water inlet 5. Hence, when the valve piston 21 is seated against the first seat 23 fluid communication between the hot water inlet 5 and the mixing chamber 9 is blocked by the valve piston 21 and when the valve piston 21 is seated against the second seat 25 fluid communication between the cold water inlet 7 and the mixing chamber 9 is blocked by the valve piston 21.

The thermostat device 19 comprises a temperature responsive control member 27 which is arranged in the mixing chamber 9 for affecting the valve piston 21 according to the preset temperature. The temperature responsive control member 27 and the valve piston 21 are movable together in the mixing chamber 9, immobilized in relation to each other.

The temperature responsive control member 27 is arranged to respond to the temperature in the mixing chamber 9 by means of a thermostat piston 31 slidable in a sleeve 33 formed integrally with the temperature responsive control member 27. The position of the adjustment screw 13a of the actuator 13 defines an end position for the thermostat piston 31 and corresponds to the desired fluid temperature in the mixing chamber 9.

The temperature responsive control member 27 comprises a wax element enclosed in a casing 29 and responding to the temperature of the fluid in the mixing chamber 9 by expanding with rising temperature or contracting with falling temperature. When expanding, the thermostat piston 31, is pushed upwards in a sleeve 33, moving the valve piston 21 downwards against the action of the spring 17. This closes the hot water inlet 5 and opens the cold water inlet 7. When contracting, the valve piston 21 is pushed upwards by the action of the spring 17, pressing the thermostat piston 31 into the sleeve 33.

The flow control assembly 15 is thus adapted to be moved by the thermostat device 19 in response to a preset temperature. The thermostat device 19 senses the temperature of fluid in the mixing chamber 9 and regulates the flow of hot fluid as needed, to maintain the temperature at, or at least close to, the preset temperature.

The mixing valve 1 further comprises a cold water bypass opening, in the form of a central opening 35 in the bottom cup 4 of the valve housing 3, a bypass closure member 37 and a holding device in the form of a conical coil spring 39. The central opening 35 is disposed in a base surface 41 of the bottom cup 4 of the valve housing 3.

The bypass closure member 37 is movable between a closed position in which the cold water bypass opening 35 is closed by the bypass closure member 37 and an open position in which the cold water bypass opening 35 is open and allows flow from the cold water inlet 7 to the mixing chamber 9.

The bypass closure member 37 comprises a disc-shaped closure portion 43, which is spring-biased by the conical spring 39 against a seat 45 surrounding the bypass opening 35, and a stem 47 which is fixed to the disc-shaped closure portion 43.

The holding device 39 is thus arranged for applying a holding force to the valve closure member 37, which holding force holds the bypass closure member 37 in the closed position.

During normal operation of the thermostatic mixing valve 1, i.e. when hot and cold water supply is present, the bypass closure member 37 is held in the closed position by the holding device 39.

The thermostatic mixing 1 valve may be used to regulate the fluid temperature in emergency shower or eyewash systems. In such systems it is desired to continue deliver a predetermined flow even in the event of hot water supply failure.

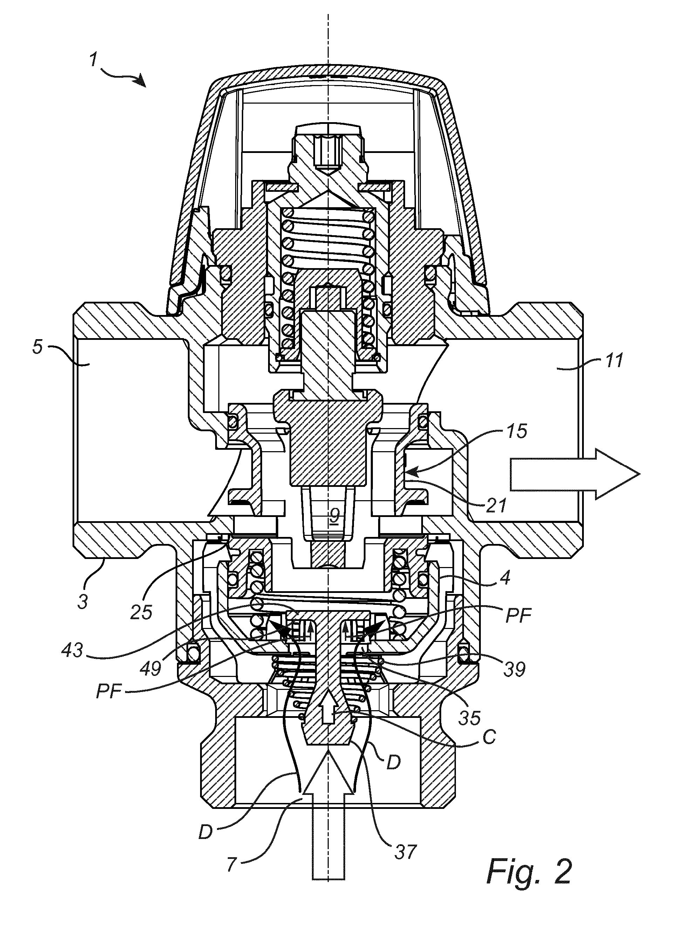

Now referring to Fig. 2 the function of the thermostatic mixing valve 1 will be further described.

Upon hot water supply failure in a safety system, such as an eyewash shower system or a drench shower system, fitted with the thermostatic valve 1 the thermostatic device 19 acts to move the valve piston 21 toward the seat 25, thereby blocking cold water supply through the ordinary path through the thermostatic mixing valve 1.

Then, the pressure force PF exerted to the pressure surface 49 of the disc-shaped closure portion 43 by cold water in the cold water inlet 7 increases. When this pressure force exceeds the predetermined holding force the disc-shaped closure portion 43 will be urged away from the valve seat 45, i.e. moved to an open position. In the open position, illustrated in Fig. 2, the closure member 37 allows cold water to pass through the bypass opening 35 as illustrated by the arrow D in Fig. 2.

Hence, upon a pressure force PF, exerted to the pressure surface 49 of the bypass closure member 37 by fluid in the cold water inlet 7, that exceeds the holding force exerted by the holding device 35 a bypass path through the flow control assembly 15 is opened, causing cold water to enter the mixing chamber 9, as illustrated by arrows D in Fig. 2, and exit the same via the fluid outlet 11.

Hence, upon a hot water supply failure the lack of hot water causes an ordinary cold water opening to be closed by the thermostatic device, the wax element of which retracts upon the lack of hot water.

The bypass passageway, illustrated by arrows D in Fig. 2, formed by the bypass opening 35 is adapted to allow sufficient flow of cold water to bypass the ordinary opening and be directed to the mixing chamber 9.

A sufficient cold water flow may thus be delivered in the emergency system comprising the thermostatic mixing valve 1 upon a hot water supply failure.

It will be appreciated that numerous variants of the embodiments described above are possible within the scope of the appended claims.

For example, various types of adjustment means, temperature responsive control members and actuators could be used.

## Claims

1. A thermostatic mixing valve (1) comprising
a valve housing (3) with a hot fluid inlet (5), a cold fluid inlet (7), a fluid mixing chamber (9) for receiving fluid from the hot and the cold fluid inlet, and a fluid outlet (11) in fluid communication with the fluid mixing chamber (9),
a spring-biased flow control assembly (15) for controlling flow of fluid to the fluid mixing chamber (9), and
a thermostat device (19) for operating the flow control assembly (15),
wherein the flow control assembly (15) is adapted to be moved by the thermostat device (19) in response to a preset temperature,
**characterized in that**
the thermostatic mixing valve (1) comprises
a cold fluid bypass opening (35),
a bypass closure member (37) movable between a closed position in which said cold fluid bypass opening (35) is closed by the bypass closure member (37) and an open position in which the cold fluid bypass opening (35) is open and allows flow of cold fluid to the mixing chamber (9), and
a holding device (39) arranged to apply a holding force to the bypass closure member (37) to hold the bypass closure member (37) in the closed position,
wherein the bypass closure member (37) is arranged to be moved from the closed position to the open position when a pressure force (PF) exerted to a pressure surface (49) of the bypass closure member (37, 43) by cold fluid in the cold fluid inlet (7) exceeds said holding force.

2. Thermostatic mixing valve (1) according to claim 1, wherein said bypass opening (35) is a central opening in a bottom portion (4) of said valve housing (3).

3. Thermostatic mixing valve (1) according to any of the preceding claims, wherein said central opening (35) is circular.

4. Thermostatic mixing valve (1) according to claim 3, wherein the diameter of said central opening (35) is 6-20 mm, more preferably 8-18 mm and most preferably 11-15 mm.

5. Thermostatic mixing valve (1) according to any of the preceding claims, wherein the area of said central opening (35) is 30-314 mm², more preferably 50-250 mm² and most preferably 95-180 mm².

6. Thermostatic mixing valve (1) according to any of the preceding claims, wherein the bypass opening (35) has a seat (45) against which a closure portion (43) of the closure member (37) is biased by the holding device (39).

7. Thermostatic mixing valve (1) according to any of the preceding claims, wherein the holding device (39) comprises a spring (39) and preferably a conical spring (39).

8. Thermostatic mixing valve (1) according to any of the preceding claims, wherein said bypass closure member (37) comprises a disc-shaped closure portion (43).

9. Thermostatic mixing valve (1) according to any of the preceding claims, wherein the hot fluid inlet (5) and the cold fluid inlet (7) are disposed perpendicular to each other.

10. Thermostatic mixing valve according to any of the preceding claims, wherein the hot fluid inlet and the cold fluid outlet are disposed opposite to each other.

11. Thermostatic mixing valve (1) according to any of the preceding claims, wherein the hot fluid inlet (5) and the fluid outlet (11) are disposed opposite to each other and the cold fluid inlet (7) is disposed perpendicular to each of the hot fluid inlet (5) and the fluid outlet (11).

12. Safety shower system, such as an eyewash or emergency shower system, which safety shower system comprises a thermostatic mixing valve (1) according to any of the preceding claims.
